# EUROPÄISCHE PATENTSCHRIFT

(11) **EP 1 218 656 B1**
(45) Veröffentlichungstag und Bekanntmachung des Hinweises auf die Patenterteilung: **09.03.2005**
(21) Anmeldenummer: 01969519.6
(22) Anmeldetag: 26.07.2001
(51) Int. Cl.: F16K 27/00, F15B 13/00

(54) **VENTILANORDNUNG**
VALVE ASSEMBLY
ENSEMBLE VANNE

(30) Priorität: 10.08.2000 DE 10039072
(43) Veröffentlichungstag der Anmeldung: 03.07.2002
(73) Patentinhaber: FESTO AG & Co, 73734 Esslingen (DE)
(72) Erfinder: BURKHARDT, Werner, 73734 Esslingen (DE); GERHARTZ, Jürgen, 73734 Esslingen (DE)
(74) Vertreter: Abel, Martin, Dipl.-Ing.
(86) Internationale Anmeldenummer: PCT/EP2001/008634
(87) Internationale Veröffentlichungsnummer: WO 2002/012763

(56) Entgegenhaltungen:
- US-A- 4 247 133
- US-A- 5 555 911
- US-A- 6 039 358

## Beschreibung

Die Erfindung betrifft eine ventilanordnung, die mindestens ein Ventil enthält, das ein mit Gehäusekanälen versehenes Ventilgehäuse aufweist und das über eine Schnittstelle so an einer Anschlussplatte montierbar ist, dass mindestens ein im Ventilgehäuse verlaufender Gehäusekanal mit einem in der Anschlussplatte verlaufenden Anschlusskanal kommuniziert.

Eine derartige Ventilanordnung geht beispielsweise aus der EP-A-0 493 972 hervor. In diesem bekannten Falle verfügt die Ventilanordnung über mindestens ein Ventil und eine Anschlußplatte, wobei das Ventil ein mit Gehäusekanälen versehenes Ventilgehäuse aufweist, das an einer ersten Gehäuseseite eine erste Schnittstelle zur Montage der Anschlußplatte aufweist. Die Anschlußplatte enthält mindestens einen im Bereich der zugeordneten Schnittstelle mit einem Gehäusekanal kommunizierenden Anschlußkanal dem Anschlußmittel zum Anschließen einer Fluidleitung zugeordnet sind, wobei die Anschlußplatte dadurch am Ventilgehäuse gehalten ist, daß sie über Einhängemittel am Ventilgehäuse verankert ist.

Zwar ermöglicht die bekannte Ventilanordnung eine relativ bequeme Montage und Demontage zwischen den Ventilen und der jeweils zugeordneten Anschlussplatte. Soll jedoch eine Umrüstung hinsichtlich andersartiger Anschlussmittel für Fluidleitungen erfolgen, ist ein komplettes Zerlegen der die Anschlussplatten bildenden Fluidverteilerplatte erforderlich.

Es ist die Aufgabe der Erfindung, eine Ventilanordnung zu schaffen, die bei einfacher Montage- und Demontagemöglichkeit einen flexiblen Aufbau zur Anpassung an unterschiedliche Einsatzfälle gestattet.

Gelöst wird diese Aufgabe durch eine Ventilanordnung, mit mindestens einem Ventil, einer ersten Anschlussplatte und einer zweiten Anschlussplatte, wobei das Ventil, ein mit Gehäusekanälen versehenes Ventilgehäuse aufweist, das an einer ersten Gehäuseseite eine erste Schnittstelle zur Montage der ersten Anschlussplatte und an einer der ersten Gehäuseseite entgegengesetzten zweiten Gehäuseseite eine zweite Schnittstelle zur Montage der zweiten Anschlussplatte aufweist, wobei jede Anschlussplatte mindestens einen im Bereich der zugeordneten Schnittstelle mit einem Gehäusekanal kommunizierenden Anschlusskanal aufweist, dem zumindest im Falle der ersten Anschlussplatte Anschlussmittel zum Anschließen einer Fluidleitung zugeordnet sind, und wobei die erste Anschlussplatte dadurch am Ventilgehäuse gehalten ist, dass sie zum einen über Einhängemittel am Ventilgehäuse verankert ist und zum anderen, beabstandet zu den Einhängemitteln, mittels das Ventilgehäuse innen und/oder außen passierender Befestigungsmittel an der an der zweiten Schnittstelle plazierten zweiten Anschlussplatte fixiert ist.

Bei dieser Ventilanordnung ist also das betreffende Ventil auf entgegengesetzten Seiten von jeweils einer Anschlussplatte flankiert, wobei die Anschlussplatten an geeigneten Schnittstellen des Ventilgehäuses plaziert sind. Die mit Anschlussmitteln zum Anschließen von mindestens einer Fluidleitung ausgestattete erste Anschlussplatte ist dadurch am Ventilgehäuse gehalten, dass sie zum einen am Ventilgehäuse eingehängt und verankert wird und zum anderen mittels zusätzlicher Befestigungsmittel fixiert wird. Dabei haben die Befestigungsmittel eine Mehrfachfunktion, indem sie nicht nur zur Befestigung der ersten Anschlussplatte dienen, sondern gleichzeitig auch dazu beitragen, eine auf der entgegengesetzten Seite des Ventilgehäuses vorgesehene zweite Anschlussplatte zu halten. Handelt es sich bei dieser zweiten Anschlussplatte um einen Bestandteil einer Fluidverteilerplatte, können mithin die Befestigungsmittel kombiniert zum einen zum Befestigen der ersten Anschlussplatte bezüglich des Ventilgehäuses und zum anderen zum Befestigen des Ventilgehäuses an der Fluidverteilerplatte herangezogen werden. Beim Zusammenbau der Ventilanordnung können die benötigten fluidischen Anschlussmittel dem Anwendungsfall entsprechend ausgewählt werden, indem man die Ventile individuell mit ersten Anschlussplatten ausstattet, die über die spezifisch gewünschten Anschlussmittel verfügen. Es ergibt sich somit ein modularer Aufbau, der eine flexible Fertigung und Montage der Ventilanordnung gestattet und sich sehr flexibel an den jeweiligen Anwendungsfall anpassen lässt.

Vorteilhafte Weiterbildungen der Erfindung gehen aus den Unteransprüchen hervor.

Zweckmäßigerweise wird die zweite Anschlussplatte vergleichbar der ersten Anschlussplatte durch Einhängemittel am Ventilgehäuse verankert, so dass die gemeinsam zugeordneten Befestigungsmittel lediglich noch dazu verwendet werden müssen, die Anschlussplatten an Ort und Stelle der betreffenden Schnittstelle zu fixieren.

Besonders vorteilhaft ist eine Bauform, bei der die Befestigungsmittel von einer einzigen Befestigungsschraube gebildet sind, die insbesondere so installiert wird, dass ihr Betätigungsende der ersten Anschlussplatte zugeordnet ist. Die Montage und Demontage der einzelnen Komponenten kann auf diese Weise rasch und bequem vonstatten gehen.

Zweckmäßigerweise wird eine Befestigungsschraube verwendet, die ein selbstschneidendes Gewinde hat, welches sich beim erstmaligen Einschrauben in eine zugeordnete Befestigungsbohrung der zweiten Anschlussplatte einschneiden kann.

An den Schnittstellen im Übergangsbereich zwischen miteinander kommunizierenden Gehäuse- und Anschlusskanälen sind zweckmäßigerweise Dichtungsmittel vorgesehen, die einen Fluidaustritt verhindern und bei denen es sich beispielsweise um Dichtungsringe handelt. Bevorzugt bestehen die Dichtungsmittel aus gummielastischem Material, wobei sie bei der Montage der Anschlussplatten unter elastischer Verformung verpresst werden. Greift in einem solchen Falle die Befestigungsschraube zwar bereits in die erste Anschlussplatte sowie in das Ventilgehäuse ein, ist jedoch noch nicht mit der zweiten Anschlussplatte verschraubt, so wird die erste Anschlussplatte in eine Schrägstellung gedrückt, in der sie eine bezüglich dem Ventilgehäuse um den Bereich der Einhängemittel geringfügig verschwenkte Stellung einnimmt und in der sie durch die zwischen dem Ventilgehäuse und der ersten Anschlussplatte verkantete Befestigungsschraube fixiert ist. Auf diese Weise kann man eine verliersichere Verbindung zwischen der ersten Anschlussplatte und dem Ventilgehäuse bei noch nicht montierter zweiter Anschlussplatte erreichen, was sich bei einer Ersatzteillieferung oder zu Transportzwecken als sehr vorteilhaft erweist.

Eine oder beide Schnittstellen können am Grund einer Aussparung des Ventilgehäuses vorgesehen sein, die an einer Vorderseite von einem Befestigungsflansch des Ventilgehäuses begrenzt ist, der zur Befestigung des Ventilgehäuses an einem Ventilantrieb dient, beispielsweise an einer Elektromagneteinrichtung oder an einer Piezoeinrichtung. Dabei können die ventilgehäuseseitigen Komponenten der Einhängemittel an der der Aussparung zugewandten Seite des Befestigungsflansches vorgesehen sein.

Jede mit Komponenten der Einhängemittel versehene Anschlussplatte kann so ausgebildet sein, dass sie im montierten Zustand sämtliche ihr zugeordneten Einhängemittel abdeckt, insbesondere derart, dass die Einhängemittel von außen her unsichtbar sind.

Die Ventilanordnung kann über lediglich ein ventil verfügen, dessen Ventilgehäuse auf entgegengesetzten Seiten von jeweils einer einzelnen Anschlussplatte flankiert ist. Möglich ist aber auch eine Bauform, bei der mehrere Ventile vorhanden sind, deren zweite Anschlussplatten von einer gemeinsamen Fluidverteilerplatte gebildet sind, an die die Ventilgehäuse mit ihren zweiten Schnittstellen ansetzbar sind. Auf diese Weise kann sehr einfach eine batterieartige Ventilanordnung realisiert werden.

Bei einer besonders vorteilhaften Ausgestaltung ist die erste Anschlussplatte mit einem Anschlusskanal versehen, der einen mit einem zu betätigenden Verbraucher verbindbaren Arbeitskanal bildet. Die zweite Anschlussplatte ist dabei mit mindestens einem Speisekanal und mindestens einem Entlüftungskanal als Anschlusskanal versehen.

Nachfolgend wird die Erfindung anhand der beiliegenden Zeichnung näher erläutert. In dieser zeigen:
- Figur 1: eine bevorzugte Ausführungsform der erfindungsgemäßen Ventilanordnung in perspektivischer Explosionsdarstellung,
- Figur 2: die bei der Ventilanordnung aus Figur 1 verwendete erste Anschlussplatte in perspektivischer Einzeldarstellung mit Blick auf die Einhängemittel,
- Figur 3: eine Seitenansicht der Ventilanordnung aus Figur 1, teilweise aufgebrochen und ohne Darstellung der an den Anschlussplatten vorgesehenen Anschlussmittel, und
- Figur 4: eine weitere Seitenansicht der Ventilanordnung aus Figur 1, wobei ein erster aufgebrochener Bereich einem Schnitt gemäß Schnittlinie I-I aus Figur 1 entspricht und wobei zwei weitere aufgebrochene Bereiche einem Schnitt gemäß Schnittlinie II-II entsprechen.

Die abgebildete Ventilanordnung enthält eine Ventileinheit 1 und einen Ventilantrieb 2, wobei letzterer für den Antrieb eines Ventils 3 der Ventileinheit 1 zuständig ist.

Der Ventilantrieb 2 ist bevorzugt als Elektromagneteinrichtung ausgebildet, kann allerdings auch auf einem anderen Betätigungsprinzip beruhen und beispielsweise als Piezoeinrichtung ausgebildet sein. Die Aktivierung erfolgt durch elektrische Energie, die über Kontaktmittel 4 eingespeist werden kann.

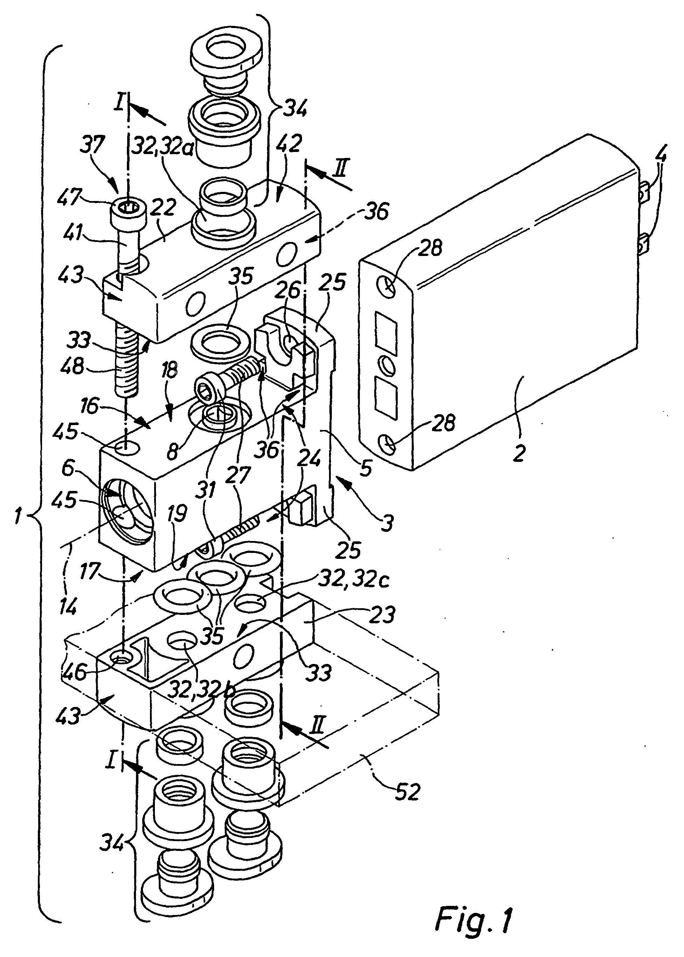

Das Ventil 3 verfügt über ein Ventilgehäuse 5, in dem sich ein Aufnahmeraum 6 befindet, der eine in Figur 1 nicht dargestelltes bewegliches Ventilglied 7 enthält.

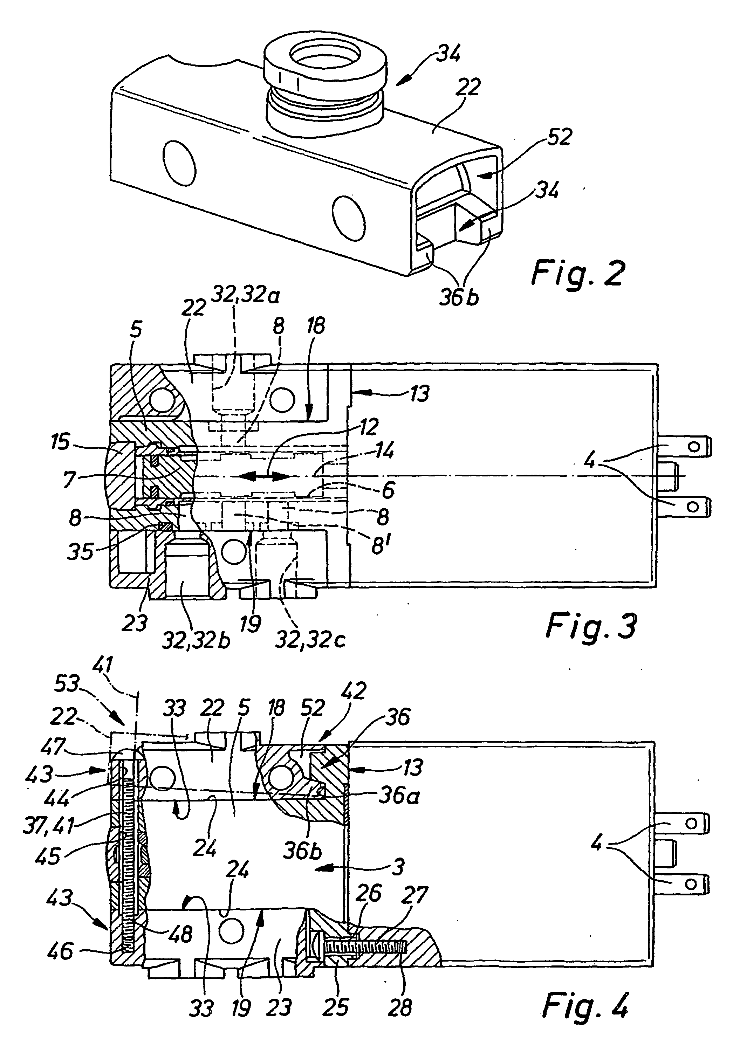

In den Aufnahmeraum 6 münden umfangsseitig mehrere das Ventilgehäuse 5 durchziehende Gehäusekanäle 8. In Abhängigkeit von der Schaltstellung des Ventilgliedes 7 lassen sich die Gehäusekanäle 8 mit unterschiedlicher Konfiguration fluidisch untereinander verbinden. Die momentane Schaltstellung des Ventilgliedes 7 wird durch den Ventilantrieb 2 vorgegeben. Die Schaltbewegung des Ventilgliedes 7 ist vorzugsweise eine Linearbewegung und in Figur 3 durch Doppelpfeil 12 angedeutet.

Der Ventilantrieb 2 ist an einer an der Vorderseite des Ventilgehäuses 5 vorgesehenen Montagefläche 13 lösbar befestigt. Die Schaltbewegung 12 ist rechtwinkelig zu der Montagefläche 13 orientiert und fällt vorliegend mit der Orientierung der Längsachse 14 des Ventilgehäuses 5 zusammen.

Das Ventilglied 7 ist beim Ausführungsbeispiel kolbenartig ausgebildet, kann aber auch eine andere Gestaltung aufweisen.

An der der Montagefläche 13 entgegengesetzten Rückseite des Ventilgehäuses 5 ist der das Ventilglied 7 enthaltende Aufnahmeraum 6 durch einen Abschlussdeckel 15 verschlossen.

An einer längsseits angeordneten ersten Gehäuseseite 16 sowie an einer entgegengesetzt zu dieser orientierten zweiten Gehäuseseite 17 ist das Ventilgehäuse 5 mit jeweils einer Schnittstelle versehen, die zur besseren Unterscheidung als erste und zweite Schnittstellen 18, 19 bezeichnet seien. Die erste Schnittstelle 18 dient zur lösbaren Montage einer ersten Anschlussplatte 22, die zweite Schnittstelle 19 zur lösbaren Montage einer zweiten Anschlussplatte 23. Die Figuren 3 und 4 zeigen den montierten Zustand dieser Anschlussplatten 22, 23.

Die ersten und zweiten Schnittstellen 18, 19 sind zweckmäßigerweise im wesentlichen gebildet von ebenen Gehäuseflächen des Ventilgehäuses 5, deren Normalenrichtungen zueinander parallel sind und rechtwinkelig zur Längsachse 14 des Ventilgehäuses 5 verlaufen.

Beim Ausführungsbeispiel ist jede Schnittstelle 18, 19 am Grund einer Aussparung 24 des Ventilgehäuses 5 vorgesehen, die an der der Montagefläche 13 zugewandten Vorderseite durch einen rechtwinkelig zur Längsachse 14 verlaufenden laschenartigen Befestigungsflansch 25 begrenzt ist. Die Montagefläche 13 erstreckt sich an der der Aussparung 24 entgegengesetzten Seite über die Befestigungsflansche 25 hinweg.

Jeder Befestigungsflansch 25 wird von einem sich parallel zur Längsachse 14 erstreckenden Befestigungsloch 26 durchsetzt. Durch dieses hindurch greift jeweils, von der der Aussparung 24 zugewandten Seite her, eine Montageschraube 27, die sich mit ihrem Schraubenkopf 31 am Befestigungsflansch 25 abstützt und die mit ihrem Gewindeschaft in eine Befestigungsbohrung 28 des Ventilantriebes 2 eingreift. Auf diese Weise ist das Ventilgehäuse 5 lösbar fest mit dem Ventilantrieb 2 verbunden. Die Montageschrauben 27 können mit selbstschneidenden Gewinden ausgestattet sein.

Die beiden Anschlussplatten 22, 23 sind jeweils mit mindestens einem Anschlusskanal 32 versehen, der einenends zu einer Montagefläche 33 der betreffenden Anschlussplatte 22, 23 ausmündet. Den entgegengesetzten Endabschnitten der Anschlusskanäle 32 sind Anschlussmittel 34 zugeordnet, die sich an der betreffenden Anschlussplatte 22, 23 befinden und jeweils den fluiddichten, vorzugsweise lösbaren Anschluss einer nicht näher dargestellten weiterführenden Fluidleitung gestatten. Es kann sich hier um starre oder flexible Fluidleitungen handeln.

Die Anschlussplatten 22, 23 sitzen im montieren Zustand in der jeweils zugeordneten Aussparung 24 des Ventilgehäuses 5 ein, wobei ihre Montagefläche 33 der jeweiligen Schnittstellenfläche 18, 19 zugewandt ist und jeder Anschlusskanal 32 mit einem der Gehäusekanäle 8 kommuniziert, die mit ihrem dem Aufnahmeraum 6 entgegengesetzten Enden in einer gewünschten Verteilung zu den Schnittstellen 18, 19 ausmünden. Das Ventilgehäuse 5 bildet gemeinsam mit den montierten Anschlussplatten 22, 23 einen quaderförmigen Körper mit insbesondere plattenartiger Flachgestalt.

An den Schnittstellen 18, 19 sind im Übergangsbereich zwischen den miteinander fluchtenden Gehäuse- und Anschlusskanälen 8, 32 geeignete Dichtungsmittel 35 vorgesehen, die einen leckagefreien Fluidübertritt gestatten. Die Dichtungsmittel 35 können beispielsweise von aus Material mit gummielastischen Eigenschaften bestehenden Dichtungsringen gebildet sein.

Beim Ausführungsbeispiel ist an der ersten Anschlussplatte 22 lediglich ein Anschlusskanal 32 vorgesehen. Dieser bildet einen Arbeitskanal 32a, der zur Verbindung mit einem durch Fluidkraft zu betätigenden Verbraucher vorgesehen ist. Die zweite Anschlussplatte 23 verfügt insgesamt über zwei Anschlusskanäle 32, deren einer einen Speisekanal 32b und deren anderer einen Entlüftungskanal 32c bildet.

Im Betrieb der Ventileinheit 1 wird über den Speisekanal 32b fluidisches Druckmittel, insbesondere Druckluft eingespeist. In einer Schaltstellung des Ventilgliedes 7 steht der Speisekanal 32b mit dem Arbeitskanal 32a in Verbindung, während gleichzeitig der Entlüftungskanal 32c abgetrennt ist. In einer anderen Schaltstellung des Ventilgliedes 7 kommuniziert der Arbeitskanal 32a mit dem Entlüftungskanal 32c, bei gleichzeitiger Abtrennung des Speisekanals 32b. Auf diese Weise liegt eine 3/2-Ventilfunktion vor. Das Ventil 3 kann allerdings auch eine andere Funktionalität haben.

Die Anschlussplatten 22, 23 sind vorzugsweise auswechselbar am Ventilgehäuse 5 angeordnet. Dies begünstigt den modularen Aufbau der Ventileinheit 1, indem nach Wahl Anschlussplatten angesetzt werden können, die mit voneinander abweichenden Anschlussmitteln 34 ausgestattet sind. Die beim Ausführungsbeispiel vorhandenen Anschlussmittel 34 sind Steckanschlussmittel, die eine lösbare, abgedichtete Steckverbindung von Fluidleitungen ermöglichen. Hier besteht nun die Möglichkeit, weitere Anschlussplatten zur Verfügung zu stellen, die ebenfalls über Steckanschlussmittel verfügen, welche jedoch über andere Anschlussdurchmesser zum Anschließen von Fluidleitungen größerer oder kleinerer Leitungsquerschnitte verfügen. Des Weiteren könnten alternativ Anschlussplatten angebracht werden, die über andere Typen von Anschlussmitteln verfügen, beispielsweise über Schraubanschlussmittel, wobei auch eine Variation der Gewindetypen möglich ist. An ein und derselben Schnittstelle 18, 19 können also alternativ unterschiedliche Anschlussplatten montiert werden.

Den beiden Anschlussplatten 22, 23 sind Mittel zugeordnet, die unter Verwendung nur weniger Bauteile eine einfache und zeitsparende Montage sowie Demontage bezüglich des Ventilgehäuses 5 ermöglichen. So ist beiden Anschlussplatten 22, 23 beim Ausführungsbeispiel gemeinsam, dass sie jeweils gleichzeitig mittels zweier verschiedener Arten von Haltemitteln am Ventilgehäuse 5 gehalten sind. Dabei handelt es sich zum einen um Einhängemittel 36, die eine gegenseitige formschlüssige Verankerung gestatten, allein aber noch nicht in der Lage sind, die Anschlussplatten 22, 23 an Ort und Stelle zu halten. Daher sind zum anderen noch Befestigungsmittel 37 vorgesehen, die die endgültige Fixierung einer jeweiligen Anschlussplatte 22, 23 am Ventilgehäuse 5 ermöglichen, indem die Anschlussplatten 22, 23 mit dem Ventilgehäuse 5 rechtwinkelig zur Ebene der Schnittstellen 18, 19 mit dem Ventilgehäuse 5 kraftschlüssig verspannt werden. Die Befestigungsmittel 37 sind hierbei mit Abstand zu den Einhängemitteln 36 angeordnet.

Ein besonderes Merkmal der Befestigungsmittel 37 besteht darin, dass sie nicht am Ventilgehäuse 5 verankert sind, sondern dieses Ventilgehäuse 5 innen und/oder außen passieren, sich also ausgehend von der jeweils einen Anschlussplatte unter Überbrückung des Ventilgehäuses 5 zur anderen Anschlussplatte erstrecken, wobei sie an beiden Anschlussplatten 22, 23 angreifen und gleichzeitig beide Anschlussplatten 22, 23 von entgegengesetzten Seiten her mit dem dazwischenliegenden Ventilgehäuse 5 verspannen. Man könnte hier von einer Art Sandwichaufbau sprechen.

Bei dem besonders vorteilhaften Ausführungsbeispiel bestehen die Befestigungsmittel 37 aus einer einzigen Befestigungsschraube 41, die gleichzeitig zur Fixierung beider Anschlussplatten 22, 23 dient und das Ventilgehäuse 5 durchsetzt.

Die beiden Anschlussplatten 22, 23 haben jeweils eine längliche Gestalt und erstrecken sich über die Länge der jeweils zugeordneten Aussparung 24. Die Einhängemittel 36 sind dabei dem einen schmalseitigen Endbereich der Anschlussplatten 22, 23 zugeordnet, welcher nachfolgend als vorderer Endbereich 42 bezeichnet sei und der dem zugeordneten Befestigungsflansch 25 benachbart ist. Die Befestigungsschraube 41 befindet sich am entgegengesetzten schmalseitigen Endbereich der jeweiligen Anschlussplatte 22, 23, der als rückwärtiger Endbereich 43 bezeichnet sei.

Die in der zeichnung oben plazierte erste Anschlussplatte 22 hat ein plattenseitiges Durchgangsloch 44, das mit einem gehäuseseitigen Durchgangsloch 45 des ventilgehäuses 5 fluchtet, welches wiederum in axialer Flucht mit einem an der zweiten Anschlussplatte 23 vorgesehenen Befestigungsloch 46 geringeren Durchmessers ausgerichtet ist. Diese vorerwähnten Löcher dienen zur Aufnahme der Befestigungsschraube 41, die von der ersten Anschlussplatte 22 her montiert und demontiert wird, wobei sie ein der ersten Anschlussplatte 22 zugeordnetes, als Schraubenkopf ausgebildetes Betätigungsende 47 aufweist.

Die Einhängemittel 36 sind so ausgebildet, dass sie sich im montierten Zustand der zugeordneten Anschlussplatte 22, 23 vergleichbar der Figur 4 quer zur Normalenrichtung der Schnittstellen 18, 19 hintergreifen. Bei der Montage wird die jeweilige Anschlussplatte 22, 23, insbesondere in leichter Schräglage, in die Aussparung 24 eingetaucht und vorzugsweise gleichzeitig in Richtung zum zugeordneten Befestigungsflansch 25 bewegt, an dessen der Aussparung zugewandter Seite die ventilgehäuseseitigen Einhängemittel 36a vorgesehen sind. Letztere sind beim Ausführungsbeispiel von zwei Einhängevertiefungen gebildet.

Bei dieser Seitwärtsbewegung greifen die beim Ausführungsbeispiel von zwei beabstandeten Einhängevorsprüngen gebildeten anschlussplattenseitigen Einhängemittel 36b in die Einhängevertiefungen ein. Die Eingriffstiefe wird dadurch begrenzt, dass die Einhängevertiefungen 36a an der der jeweiligen Schnittstelle 18, 19 mit Abstand gegenüberliegenden Flanke geneigt verlaufen, so dass sich eine jeweilige Einhängevertiefung 36a mit zunehmender Entfernung von der Aussparung 24 verjüngt. Die Einhängevorsprünge 36b an der jeweiligen Anschlussplatte 22, 23 verjüngen sich entsprechend, so dass die Einhängemittel 36 nach Art einer Keilverbindung ineinander eingreifen können, wobei die Eingriffstiefe durch den Formschluss zwischen den Einhängevertiefungen 36a und den Einhängevorsprüngen 36b begrenzt wird.

Es versteht sich, dass die Zuordnung der Einhängevorsprünge und Einhängevertiefungen bezüglich der Anschlussplatte und dem Ventilgehäuse auch umgekehrt getroffen werden kann.

Nachdem in einem ersten Montageschritt die Anschlussplatten 22, 23 unter Herstellung der Einhängeverbindung an der zugeordneten Schnittstelle 18, 19 plaziert sind, wird schließlich noch die einzige Befestigungsschraube 41 installiert. Sie wird von der Außenseite der ersten Anschlussplatte 22 her durch das plattenseitige Durchgangsloch 44 und das fluchtende gehäuseseitige Durchgangsloch 45 hindurchgeführt und mit ihrem vorauseilenden Gewindeschaft 48 in das Befestigungsloch 46 der zweiten Anschlussplatte 23 eingeschraubt. Da die Anschlussplatten 22, 23 bevorzugt aus Kunststoffmaterial bestehen, kann das Befestigungsloch 46 ursprünglich gewindelos ausgeführt sein, wobei der Gewindeschaft 48 mit einem selbstschneidenden Gewinde versehen ist, das beim Einschrauben der Befestigungsschraube 41 das benötigte Gewinde selbsttätig in das Befestigungsloch 46 einschneidet. Es wäre aber auch eine konventionelle Gewindegestaltung möglich.

Indem sich das Betätigungsende 47 der Befestigungsschraube 41 an der ersten Anschlussplatte 22 abstützt und der Gewindeschaft 48 in die zweite Anschlussplatte 43 eingeschraubt wird, können die beiden Anschlussplatten 22, 23 an der den Einhängemitteln 36 entgegengesetzten Seite fest mit dem Ventilgehäuse 5 verspannt werden. Die Anschlussplatten 22, 23 sind allerdings schon vor dem Festziehen des Befestigungsschraube 41 formschlüssig an Ort und Stelle fixiert, und zwar zum einen durch den gegenseitigen Eingriff der Einhängemittel 36 und zum anderen durch den Eingriff der Befestigungsschraube 41 in die zugeordneten Löcher 44, 45, 46.

Da die Einhängemittel 36a, 36b an den Anschlussplatten 22, 23 und am Ventilgehäuse 5 jeweils paarweise und in einer zu den Schnittstellen 18, 19 parallelen Ebene rechtwinkelig zur Längsachse 14 mit Abstand zueinander angeordnet sind, verbleibt ein Zwischenraum, in dem sich platzsparend die zur Fixierung des ventilantriebes 2 dienenden Montageschrauben 27 unterbringen lassen.

Die Anschlussplatten sind an ihrem vorderen Endbereich 42 zweckmäßigerweise derart ausgebildet, dass sie im montierten Zustand die ihnen jeweils zugeordneten Einhängemittel 36 von außen her unsichtbar abdecken. Dies kann gemäß Figuren 2 und 4 dadurch erreicht werden, dass man die Anschlussplatten 22, 23 an der entsprechenden Stirnseite mit einer Vertiefung 52 versieht, in die diejenigen Bestandteile des Ventilgehäuses 5 eintauchen können, welche zur Definition der ventilgehäuseseitigen Einhängemittel 36a erforderlich sind. Auf diese Weise bilden das Ventilgehäuse 5 und die Anschlussplatten 22, 23 insgesamt einen plattenartigen, unzerklüfteten Körper, der einer Ablagerung von Verunreinigungen entgegenwirkt.

Während beim Ausführungsbeispiel beide Anschlussplatten 22, 23 der Ventileinheit 1 als Einzelkörper ausgebildet sind, so dass die Ventilanordnung insgesamt auch nur ein Ventil 3 aufweist, sieht eine abgewandelte Bauform ein Mehrfachanordnung von Ventilen 3 vor, die batterieartig zusammengefasst sind. In einem solchen Falle sind die zweiten Anschlussplatten 23 der betreffenden Ventileinheiten 1 einstückig oder durch Befestigungsmittel zu einer länglichen Fluidverteilerplatte 52 zusammengefasst, wie dies in Figur 1 strichpunktiert angedeutet ist. Es ist dann praktisch eine Mehrzahl von zweiten Anschlussplatten 23 vorhanden, die Seite an Seite liegend aufgereiht sind, wobei sie aber durchaus von einstückigen Bestandteilen der erwähnten Fluidverteilerplatte 52 gebildet sein können. Es besteht dann die Möglichkeit, die einzelnen Ventile 3 unter Vermittlung der ersten Anschlussplatte 22 und der Befestigungsmittel 37 individuell an der Fluidverteilerplatte 52 zu fixieren.

Um in einem solchen Falle das Ventil 3 von der Fluidverteilerplatte 52 abzunehmen, ist es vorzugsweise nicht erforderlich, die erste Anschlussplatte 22 komplett zu entfernen. Es genügt, die einzige Befestigungsschraube 41 soweit zu lösen, bis sie aus dem an der Fluidverteilerplatte 52 vorgesehenen Befestigungsloch 46 herausgeschraubt ist. Dabei drücken die an der ersten Schnittstelle 18 plazierten und zuvor noch gummielastisch verformten Dichtungsmittel 45 die erste Anschlussplatte 22 vom Ventilgehäuse 5 weg, wobei die erste Anschlussplatte 22 mit ihrem rückwärtigen Endbereich 43 um die weiterhin ineinander eingreifenden Einhängemittel 36 leicht nach oben verschwenkt wird, bis sich die Befestigungsschraube 41 innerhalb des plattenseitigen Durchgangsloches 44 und des gehäuseseitigen Durchgangsloches 45 verkantet. Dieser Zustand ist übertrieben in Figur 4 bei 53 strichpunktiert angedeutet. Es ergibt sich dadurch ein verliersicherer Zusammenhalt zwischen dem Ventilgehäuse 5, der ersten Anschlussplatte 22 und der Befestigungsschraube 41, was den Transport und die Handhabung sehr erleichtert.

Insbesondere wenn das Ventil 3 auf einer Fluidverteilerplatte 52 montiert wird, kann es von Vorteil sein, sämtliche Anschlusskanäle 32 an der Fluidverteilerplatte 52 bzw. an der von dieser gebildeten zweiten Anschlussplatte 23 vorzusehen. Das Ventil 3 des Ausführungsbeispiels ist ohne weiteres für eine solche Modifikation geeignet, weil sein Ventilgehäuse 5 gegenüberliegend dem zur ersten Schnittstelle 18 führenden Gehäusekanal 8 einen weiteren Gehäusekanal 8' aufweist, der zur zweiten Schnittstelle 19 ausmündet und innerhalb des Aufnahmeraumes 6 zum gleichen Bereich führt wie der vorerwähnte Gehäusekanal 8. Diese beiden Gehäusekanäle sind somit hinsichtlich ihrer Funktion gleichwertig und können wahlweise verwendet werden, um die Verbindung zu einem Anschlusskanal 32 herzustellen, der insbesondere als Arbeitskanal 32a zu verwenden ist.

Bei der in der Zeichnung gezeigten Anwendung ist der weitere Gehäusekanal 8' an der zweiten Schnittstelle 19 durch die zweite Anschlussplatte 23 und zwischengefügte Dichtmittel fluiddicht abgesperrt und funktionslos. Man kann nun aber anstelle der abgebildeten zweiten Anschlussplatte 23 eine modifizierte zweite Anschlussplatte verwenden, beispielsweise in Gestalt einer Fluidverteilerplatte 52 oder eines separaten Plattenteils, die einen mit dem weiteren Gehäusekanal 8' kommunizierenden und insbesondere als Arbeitskanal 32a zu verwendenden weiteren Anschlusskanal 32 aufweist (nicht dargestellt). In einem solchen Falle kann die erste Anschlussplatte 22 durch eine anschlusskanallose Blindplatte ersetzt werden, durch die der zur ersten Schnittstelle 18 geführte Gehäusekanal 8 verschlossen ist. Die Fixierung dieser Blindplatte erfolgt in gleicher Weise wie die durch sie ersetzte erste Anschlussplatte 22, so dass die oben geschilderten Vorteile auch in einem solchen Falle erhalten bleiben.

## Patentansprüche

1. Ventilanordnung, mit mindestens einem Ventil (3), einer ersten Anschlussplatte (22) und einer zweiten Anschlussplatte (23), wobei das Ventil (3) ein mit Gehäusekanälen (8, 8') versehenes Ventilgehäuse (5) aufweist, das an einer ersten Gehäuseseite (16) eine erste Schnittstelle (18) zur Montage der ersten Anschlussplatte (22) und an einer der ersten Gehäuseseite (16) entgegengesetzten zweiten Gehäuseseite (17) eine zweite Schnittstelle (19) zur Montage der zweiten Anschlussplatte (23) aufweist, wobei jede Anschlussplatte (22, 23) mindestens einen im Bereich der zugeordneten Schnittstelle (18, 19) mit einem Gehäusekanal (8, 8') kommunizierenden Anschlusskanal (32) aufweist, dem zumindest im Falle der ersten Anschlüssplatte (22) Anschlussmittel (34) zum Anschließen einer Fluidleitung zugeordnet sind, und wobei die erste Anschlussplatte (22) **dadurch** am Ventilgehäuse (5) gehalten ist, dass sie zum einen über Einhängemittel (36) am Ventilgehäuse (5) verankert ist und zum anderen, beabstandet zu den Einhängemitteln (36), mittels das Ventilgehäuse (5) innen und/oder außen passierender Befestigungsmittel (37) an der an der zweiten Schnittstelle (19) plazierten zweiten Anschlussplatte (23) fixiert ist.

2. Ventilanordnung nach Anspruch 1, **dadurch gekennzeichnet, dass** die zweite Anschlussplatte (23) zum einen durch die Befestigungsmittel (37) und zum anderen ebenfalls durch Einhängemittel (36) am Ventilgehäuse (5) verankert ist.

3. Ventilanordnung nach Anspruch 1 oder 2, **dadurch gekennzeichnet, dass** eine oder beide Anschlussplatten (22, 23) eine längliche Gestalt haben, wobei die Einhängemittel (36) am einen schmalseitigen Endbereich (42) und die Befestigungsmittel (37) am entgegengesetzten schmalseitigen Endbereich (43) vorgesehen sind.

4. Ventilanordnung nach einem der Ansprüche 1 bis 3, **dadurch gekennzeichnet, dass** die Befestigungsmittel (37) von einer einzigen Befestigungsschraube (41) gebildet sind.

5. Ventilanordnung nach Anspruch 4, **dadurch gekennzeichnet, dass** das Betätigungsende (47) der Befestigungsschraube (41) der ersten Anschlussplatte (22) zugeordnet ist.

6. Ventilanordnung nach Anspruch 4 oder 5, **dadurch gekennzeichnet, dass** die Befestigungsschraube (41) mit einem selbstschneidenden Gewinde versehen ist, das zum Einschneiden in ein Befestigungsloch (46) der zweiten Anschlussplatte (23) vorgesehen ist.

7. Ventilanordnung nach einem der Ansprüche 1 bis 6, **dadurch gekennzeichnet, dass** an den Schnittstellen (18, 19) im Übergangsbereich zwischen miteinander kommunizierenden Gehäuse- und Anschlusskanälen (8, 8', 32) Dichtungsmittel (35), beispielsweise Dichtungsringe, vorgesehen sind.

8. Ventilanordnung nach Anspruch 7, **dadurch gekennzeichnet, dass** die Dichtungsmittel (35) derart aus gummielastischem Material bestehen, dass sie die bereits eingehängte, jedoch noch nicht durch die Befestigungsmittel (37) an der zweiten Anschlussplatte (23) fixierte erste Anschlussplatte (22) in eine leichte Schrägstellung bezüglich der ersten Schnittstelle (18) zwingen, so dass eine sowohl in die erste Anschlussplatte (22) als auch in das Ventilgehäuse (5) eingreifende Befestigungsschraube (41) der Befestigungsmittel (37) zwischen diesen Teilen (22, 5) verkantet und die erste Anschlussplatte (22) somit verliersicher am Ventilgehäuse (5) gehalten ist.

9. Ventilanordnung nach einem der Ansprüche 1 bis 8, **dadurch gekennzeichnet, dass** die Einhängemittel (36) an der betreffenden Anschlussplatte (22, 23) mindestens einen Einhängevorsprung (36b) aufweisen, der in eine Einhängevertiefung (36a) am Ventilgehäuse (5) eingreifen kann, oder umgekehrt.

10. Ventilanordnung nach Anspruch 9, **gekennzeichnet durch** zwei in einer zur zugeordneten Schnittstelle (18, 19) parallelen Ebene mit Abstand nebeneinander angeordnete Einhängevorsprünge (36b) und Einhängevertiefungen (36a) der betreffenden Einhängemittel (36).

11. Ventilanordnung nach einem der Ansprüche 1 bis 10, **dadurch gekennzeichnet, dass** die erste und/oder zweite Schnittstelle (18, 19) am Grund einer Aussparung (24) des Ventilgehäuses (5) vorgesehen ist, die an einer Vorderseite von einem Befestigungsflansch (25) des Ventilgehäuses (5) begrenzt ist, der zur Befestigung des Ventilgehäuses (5) an einem Ventilantrieb (2), beispielsweise in Gestalt einer Elektromagneteinrichtung oder einer Piezoeinrichtung, dient.

12. Ventilanordnung nach Anspruch 11, **dadurch gekennzeichnet, dass** die ventilgehäuseseitigen Einhängemittel (36, 36a) an der der Aussparung (24) zugewandten Seite des betreffenden Befestigungsflansches (25) vorgesehen sind.

13. Ventilanordnung nach Anspruch 11 oder 12, **gekennzeichnet durch** ein den betreffenden Befestigungsflansch (25) durchsetzendes Befestigungsloch (26) zum Hindurchführen einer den Befestigungsflansch (25) mit einem Ventilantrieb (2) verbindenden Montageschraube (27).

14. Ventilanordnung nach einem der Ansprüche 1 bis 13, **dadurch gekennzeichnet, dass** die mit Einhängemitteln (36, 36b) versehene Anschlussplatte (22, 23) so ausgebildet ist, dass sie im montierten Zustand die ihr zugeordneten Einhängemittel (36) abdeckt.

15. Ventilanordnung nach einem der Ansprüche 1 bis 14, **dadurch gekennzeichnet, dass** mehrere Ventile (3) vorhanden sind, deren zweiten Anschlussplatten (23) von einer gemeinsamen Fluidverteilerplatte (52) gebildet sind, an die die Ventilgehäuse (5) mit ihren zweiten Schnittstellen (19) ansetzbar sind.

16. Ventilanordnung nach einem der Ansprüche 1 bis 15, **dadurch gekennzeichnet, dass** die erste Anschlussplatte (22) mit einem Anschlusskanal (32) versehen ist, der einen mit einem zu betätigenden Verbraucher verbindbaren Arbeitskanal (32a) bildet.

17. Ventilanordnung nach einem der Ansprüche 1 bis 16, **dadurch gekennzeichnet, dass** die zweite Anschlussplatte (23) mit mindestens einem Speisekanal (32b) und mindestens einem Entlüftungskanal (32c) als Anschlusskanal (32) versehen ist.

18. Ventilanordnung nach Anspruch 17, **dadurch gekennzeichnet, dass** die zweite Anschlussplatte (23) als weiteren Anschlusskanal (32) einen mit einem zu betätigenden Verbraucher verbindbaren Arbeitskanal aufweist.

19. Ventilanordnung nach einem der Ansprüche 1 bis 18, **dadurch gekennzeichnet, dass** eine oder beide Anschlussplatten (22, 23) mit Anschlussmitteln (34) zum Anschließen von Fluidleitungen ausgestattet sind.

20. Ventilanordnung nach Anspruch 19, **dadurch gekennzeichnet, dass** mit voneinander abweichenden Anschlussmitteln (34) ausgestattete Anschlussplatten vorhanden sind, die alternativ an ein und derselben Schnittstelle (18, 19) montierbar sind.

## Claims

1. Valve assembly with one or more valves (3), a first connection plate (22) and a second connection plate (23), wherein the valve (3) has a valve casing (5) provided with casing passages (8, 8'), and having on a first casing side (16) a first interface (18) for fitting of the first connection plate (22), and on a second casing side (17) opposite the first casing side (16) a second interface (19) for fitting of the second connection plate (23), wherein each connection plate (22, 23) has one or more connection passages (32) which communicate in the area of the assigned interface (18, 19) with a casing passage (8, 8') and are assigned, at least in the case of the first connection plate (22), connection means (34) for connecting a fluid line, and wherein the first connection plate (22) is held to the valve casing (5) on the one hand by anchoring to the valve casing (5) via suspension means (36), and on the other hand, at a distance from the suspension means (36), by fastening means (37) fitting the valve casing (5) internally and/or externally, to which the second connection plate (23) located at the second interface (19) is fixed.

2. Valve assembly according to claim 1, **characterised in that** the second connection plate (23) is anchored to the valve casing (5) on the one hand by the fastening means (37) and on the other hand similarly by suspension means (36).

3. Valve assembly according to claim 1 or 2, **characterised in that** one or both connection plates (22, 23) have an elongated shape, while the suspension means (36) are provided at one narrow-side end section (42), and the fastening means (37) at the opposite narrow-side end section (43).

4. Valve assembly according to any of claims 1 to 3, **characterised in that** the fastening means (37) are formed by a single mounting bolt (41).

5. Valve assembly according to claim 4, **characterised in that** the actuating end (47) of the mounting bolt (41) is assigned to the first connection plate (22).

6. Valve assembly according to claim 4 or 5, **characterised in that** the mounting bolt (41) is provided with a self-cutting thread for cutting into a fixing hole (46) of the second connection plate (23).

7. Valve assembly according to any of claims 1 to 6, **characterised in that** sealing means (35), for example seal rings, are provided at the interfaces (18, 19) in the transition zone between inter-communicating casing and connection passages (8, 8', 32).

8. Valve assembly according to claim 7, **characterised in that** the sealing means (35) are made of rubber-elastic material so that they force the first connection plate (22), already suspended but not yet fixed by the fastening means (37) to the second connection plate (23), into a slightly oblique position relative to the first interface (18), so that a mounting bolt (41) of the fastening means (37) engaging both in the first connection plate (22) and in the valve casing (5) is tilted between these two parts (22, 5), and the first connection plate (22) is therefore held captive on the valve casing (5).

9. Valve assembly according to any of claims 1 to 8, **characterised in that**, on the relevant connection plates (22, 23), the suspension means (36) have one or more suspension projections (36b) able to engage in a suspension recess (36a) on the valve casing (5), or vice-versa.

10. Valve assembly according to claim 9, **characterised by** two suspension projections (36b) and suspension recesses (36a) of the relevant suspension means (36), arranged adjacent to one another with spacing in a plane running parallel to the assigned interface (18, 19).

11. Valve assembly according to any of claims 1 to 10, **characterised in that** the first and/or second interface (18, 19) is provided at the base of a recess (24) of the valve casing (5) which is bounded on a front side by a mounting flange (25) of the valve casing (5) which serves for fastening the valve casing (5) to a valve drive (2), for example in the form of an electromagnetic unit or a piezoelectric unit.

12. Valve assembly according to claim 11, **characterised in that** the valve-casing-side suspension means (36, 36a) are provided on the side of the mounting flange (25) facing the recess (24).

13. Valve assembly according to claim 11 or 12, **characterised by** a fixing hole (26) passing through the relevant mounting flange (25) for the guiding through of a fitting bolt (27) connecting the mounting flange (25) to a valve drive (2).

14. Valve assembly according to any of claims 1 to 13, **characterised in that** the connection plate (22, 23) provided with suspension means (36, 36b) is so designed that, when fitted, it covers its assigned suspension means (36) .

15. Valve assembly according to any of claims 1 to 14, **characterised in that** several valves (3) are provided, with their second connection plates (23) formed by a common fluid distributor plate (52), to which the valve casings (5) may be attached by their second interfaces ( 19).

16. Valve assembly according to any of claims 1 to 15, **characterised in that** the first connection plate (22) is provided with a connection passage (32) forming an operating passage (32a) which may be connected to a load to be actuated.

17. Valve assembly according to any of claims 1 to 16, **characterised in that** the second connection plate (23) is provided with one or more feed passages (32b) and one or more vent passages (32c) as connection passages (32).

18. Valve assembly according to claim 17, **characterised in that** the second connection plate (23) has as a further connection passage (32) an operating passage which may be connected to a load to be actuated.

19. Valve assembly according to any of claims 1 to 18, **characterised in that** one or both connection plates (22, 23) are provided with connection means (34) for the connection of fluid lines.

20. Valve assembly according to claim 19, **characterised in that** connection plates equipped with varying connection means (34) are provided, for fitting alternately to one and the same interface (18, 19).

## Revendications

1. Ensemble de soupapes comportant au moins une soupape (3), une première plaque de raccordement (22) et une deuxième plaque de raccordement (23), la soupape (3) comportant un boîtier de soupape (5) pourvu de canaux de boîtier (8, 8'), lequel comporte, sur une première face (16) du boîtier, une première interface (18) pour le montage de la première plaque de raccordement (22) et, sur une deuxième face (17) du boîtier, opposée à la première face (16), une deuxième interface (19) pour le montage de la deuxième plaque de raccordement (23), chaque plaque de raccordement (22, 23) comportant au moins un canal de raccordement (32) communiquant, dans la zone de l'interface (18, 19) associée, avec un canal de boîtier (8, 8'), auquel canal de raccordement sont associés, au moins dans le cas de la première plaque de raccordement (22), des moyens de raccordement (34) pour le raccordement d'une conduite pour fluide, et la première plaque de raccordement (22) étant maintenue sur le boîtier de soupape (5) par le fait qu'elle est ancrée d'une part au boîtier de soupape (5), par des moyens d'accrochage (36), et est fixée, d'autre part, à distance des moyens d'accrochage (36), sur la deuxième plaque de raccordement (23), placée sur la deuxième interface (19), par des moyens de fixation (37) traversant le boîtier de soupape (5) à l'intérieur et/ou à l'extérieur.

2. Ensemble de soupapes selon la revendication 1, **caractérisé en ce que** la deuxième plaque de raccordement (23) est ancrée d'une part, par les moyens de fixation (37) et d'autre part également par des moyens d'accrochage (36), sur le boîtier de soupape (5).

3. Ensemble de soupapes selon la revendication 1 ou 2, **caractérisé en ce que** l'une ou les deux plaques de raccordement (22, 23) présentent une forme allongée, les moyens d'accrochage (36) étant prévus dans une zone terminale (42) sur un petit côté et les moyens de fixation (37) dans la zone terminale (43) sur le petit côté opposé.

4. Ensemble de soupapes selon l'une des revendications 1 à 3, **caractérisé en ce que** les moyens de fixation (37) sont formés par une seule vis de fixation (41).

5. Ensemble de soupapes selon la revendication 4, **caractérisé en ce que** l'extrémité de manoeuvre (47) de la vis de fixation (41) est associée à la première plaque de raccordement (22).

6. Ensemble de soupapes selon la revendication 4 ou 5, **caractérisé en ce que** la vis de fixation (41) est pourvue d'un filetage auto-taraudant qui est prévu pour s'enfoncer dans un trou de fixation (46) de la deuxième plaque de raccordement (23).

7. Ensemble de soupapes selon l'une des revendications 1 à 6, **caractérisé en ce que** sur les interfaces (18, 19), dans la zone de transition entre des canaux de boîtier et des canaux de raccordement (8, 8', 32) communiquant entre eux, il est prévu des moyens d'étanchéité (35), par exemple des bagues d'étanchéité.

8. Ensemble de soupapes selon la revendication 7, **caractérisé en ce que** les moyens d'étanchéité (35) sont constitués d'une matière présentant l'élasticité du caoutchouc telle qu'ils forcent la première plaque de raccordement (22) déjà accrochée, mais non encore fixée sur la deuxième plaque de raccordement (23) par les moyens de fixation (37), dans une position légèrement oblique par rapport à la première interface (18), ce qui fait qu'une vis de fixation (41), s'engageant aussi bien dans la première plaque de raccordement (22) que dans le boîtier de soupape (5), des moyens de fixation (37), se coince entre ces deux éléments (22, 5) et maintient ainsi la première plaque de raccordement (22) de façon imperdable sur le boîtier de soupape (5).

9. Ensemble de soupapes selon l'une des revendications 1 à 8, **caractérisé en ce que** les moyens d'accrochage (36) sur la plaque de raccordement (22, 23) concernée comportent au moins une saillie d'accrochage (36b) qui peut s'engager dans un renfoncement d'accrochage (36a) du boîtier de soupape (5), ou inversement.

10. Ensemble de soupapes selon la revendication 9, **caractérisé par** deux saillies d'accrochage (36b) et renfoncements d'accrochage (36a), disposés côte à côte et à distance dans un plan parallèle à l'interface (18, 19) associée, des moyens d'accrochage (36) concernés.

11. Ensemble de soupapes selon l'une des revendications 1 à 10, **caractérisé en ce que** la première et/ou la deuxième interface (18, 19) sont prévues sur le fond d'une découpe (24) du boîtier de soupape (5), laquelle est délimitée, sur une face avant, par une bride de fixation (25) du boîtier de soupape (5), qui sert à la fixation du boîtier de soupape (5) sur un dispositif d'actionnement de soupape (2), par exemple sous la forme d'un dispositif électromagnétique ou d'un dispositif piézo-électrique.

12. Ensemble de soupapes selon la revendication 11, **caractérisé en ce que** les moyens d'accrochage (36, 36a) côté boîtier de soupape sont prévus sur le côté, tourné vers la découpe (24), de la bride de fixation (25) concernée.

13. Ensemble de soupapes selon la revendication 11 ou 12, **caractérisé par** un trou de fixation (26), traversant la bride de fixation (25) concernée, pour le passage d'une vis de montage (27) reliant la bride de fixation (25) à un dispositif d'actionnement de soupape (2).

14. Ensemble de soupapes selon l'une des revendications 1 à 13, **caractérisé en ce que** la plaque de raccordement (22, 23), pourvue de moyens d'accrochage (36, 36b), est réalisée de façon qu'à l'état monté elle recouvre les moyens d'accrochage (36) qui lui sont associés.

15. Ensemble de soupapes selon l'une des revendications 1 à 14, **caractérisé en ce que** sont prévues plusieurs soupapes (3) dont les deuxièmes plaques de raccordement (23) sont formées par une plaque de distribution de fluide (52) commune contre laquelle le boîtier de soupape (5) peut être placé par ses deuxièmes interfaces (19).

16. Ensemble de soupapes selon l'une des revendications 1 à 15, **caractérisé en ce que** la première plaque de raccordement (22) est pourvue d'un canal de raccordement (32) qui forme un canal de travail (32a) pouvant être relié à un récepteur à actionner.

17. Ensemble de soupapes selon l'une des revendications 1 à 16, **caractérisé en ce que** la deuxième plaque de raccordement (23) est pourvue d'au moins un canal d'alimentation (32b) et d'au moins un canal de purge (32c) servant de canal de raccordement (32).

18. Ensemble de soupapes selon la revendication 17, **caractérisé en ce que** la deuxième plaque de raccordement (23) comporte, comme autre canal de raccordement (32), un canal de travail pouvant être relié à un récepteur à actionner.

19. Ensemble de soupapes selon l'une des revendications 1 à 18, **caractérisé en ce que** l'une ou les deux plaques de raccordement (22, 23) sont équipées de moyens de raccordement (34) pour le raccordement de conduites pour fluide.

20. Ensemble de soupapes selon la revendication 19, **caractérisé en ce que** sont prévues des plaques de raccordement, équipées de moyens de raccordement (34) différents les uns des autres, qui peuvent être montées sélectivement sur une seule et même interface (18, 19).
